# EUROPEAN PATENT SPECIFICATION

(11) **EP 3 152 090 B1**
(45) Date of publication and mention of the grant of the patent: **26.05.2021**
(21) Application number: 15738159.1
(22) Date of filing: 09.06.2015
(51) Int. Cl.: B60T 7/20, B60T 8/17, B60T 8/32

(54) **TRAILER BRAKE SYSTEM HAVING TRAILER GAIN OPTIMIZATION**
ANHÄNGERBREMSSYSTEM MIT ANHÄNGERVERSTÄRKUNGSOPTIMIERUNG
SYSTÈME DE FREINS DE REMORQUE OPTIMISANT LE GAIN DE REMORQUE

(30) Priority: 09.06.2014 US 201414299520
(43) Date of publication of application: 12.04.2017
(73) Proprietor: Continental Automotive Systems, Inc., Auburn Hills MI 48326 (US)
(72) Inventor: TUHRO, Matthew, Sault Ste. Marie, Michigan 49783 (US); MCLEAN, Jeremy, Dafter, Michigan 49724 (US); SCHNEIDER, Michael, 65843 Sulzbach (DE); LOU, Yongle, Auburn Hills, Michigan 48321 (US)
(74) Representative: Isarpatent
(86) International application number: PCT/US2015/034946
(87) International publication number: WO 2015/191614

(56) References cited:
- US-A1- 2006 076 827
- US-A1- 2007 024 107
- US-A1- 2008 143 179
- US-A1- 2014 046 565

## Description

### FIELD

This invention relates to an integrated trailer brake system within an electronic brake unit of a vehicle and, more particularly, to a trailer gain optimizer device for automatically increasing or decreasing the output trailer brake gain.

### BACKGROUND

With conventional electric trailer brake controllers, the user must manually adjust the gain (braking force) of the trailer hydraulic brakes. This is accomplished with a manual adjustment of the trailer brake controller. The operator must set the gain dependent on trailer loading and trailer brake effectiveness. However, there are times when the operator may set the trailer gain too high or too low for the particular application.

Fade Brake Support (FBS) is a conventional system that compares the master cylinder pressure and vehicle deceleration. If the vehicle deceleration is too low for the given master cylinder pressure, FBS will add additional hydraulic pressure until the desired deceleration is met. However, FBS will only increase the caliper pressure of the towing vehicle and does not alter the brakes of the trailer. Depending on how it is configured, FBS will only operate if the towing vehicles brakes are overheated.

In the prior art, US 2014/04 65 65 A1 discloses an integrated trailer brake control system and method using a learned relationship. Here, the brake force of the trailer and a towing vehicle is adjusted in a coordinated manner.

Thus, there is a need to automatically adjust the trailer brake gain, in cases where the operator had set the gain too high or too low, so as to provide an optimized trailer gain to brakes of the trailer. This object is solved by a method of claim 1 and by systems according to claims 5 and 9. Further advantageous embodiments and improvements of the invention are listed in the dependent claims. Before coming to a detailed description of the embodiments of the invention, hereinafter some aspects of the invention are summarized.

### SUMMARY

As explained above, the object of the invention is to fulfill the need referred to above. In accordance with an aspect of the invention, a method is provided for optimizing trailer braking gain for a trailer that is towed behind a vehicle. The method receives an operator selected trailer gain. During a braking event, braking data from at least one sensor is received. Based on the received data and the selected trailer gain, an output trailer gain is provided. During the braking event, pressure in a master cylinder of a vehicle and an actual deceleration of the vehicle is monitored. The method determines if the actual deceleration is sufficient for the monitored master cylinder pressure and if not sufficient, the output trailer gain is automatically adjusted to provide an optimized trailer gain to brakes of the trailer until the actual deceleration of the vehicle matches an expected deceleration at the monitored pressure value.

In accordance with another aspect, a trailer brake system is provided for optimizing trailer braking gain for a trailer that is towed behind a vehicle. The system includes a gain selection device for inputting an operator selected trailer gain. A trailer brake controller device is constructed and arranged to receive data regarding a braking event and to receive the selected trailer gain and to provide an output trailer gain. A sensor monitors pressure in a master cylinder of the vehicle. An acceleration sensor determines an actual deceleration of the vehicle. A trailer gain optimizer device is constructed and arranged to receive data from the sensors and to determine if the actual deceleration is sufficient for the monitored master cylinder pressure and if not sufficient, to automatically adjust the output trailer gain to provide an optimized trailer gain to brakes of the trailer until the actual deceleration of the vehicle matches an expected deceleration at the monitored pressure value.

Other objectives, features and characteristics of the present invention, as well as the methods of operation and the functions of the related elements of the structure, the combination of parts and economics of manufacture will become more apparent upon consideration of the following detailed description and appended claims with reference to the accompanying drawings, all of which form a part of this specification.

### BRIEF DESCRIPTION OF THE DRAWINGS

The invention will be better understood from the following detailed description of the preferred embodiments thereof, taken in conjunction with the accompanying drawings, wherein like reference numerals refer to like parts, in which:
FIG. 1 is a block diagram showing components of a trailer brake system in accordance with an embodiment.
FIG. 2 is a flowchart illustrating some of the steps of a method of an embodiment.
FIG. 3 graph of pressure vs. deceleration showing regions where the output trailer gain should be increased, decreased or maintained constant.

### DETAILED DESCRIPTION OF EXEMPLARY EMBODIMENTS

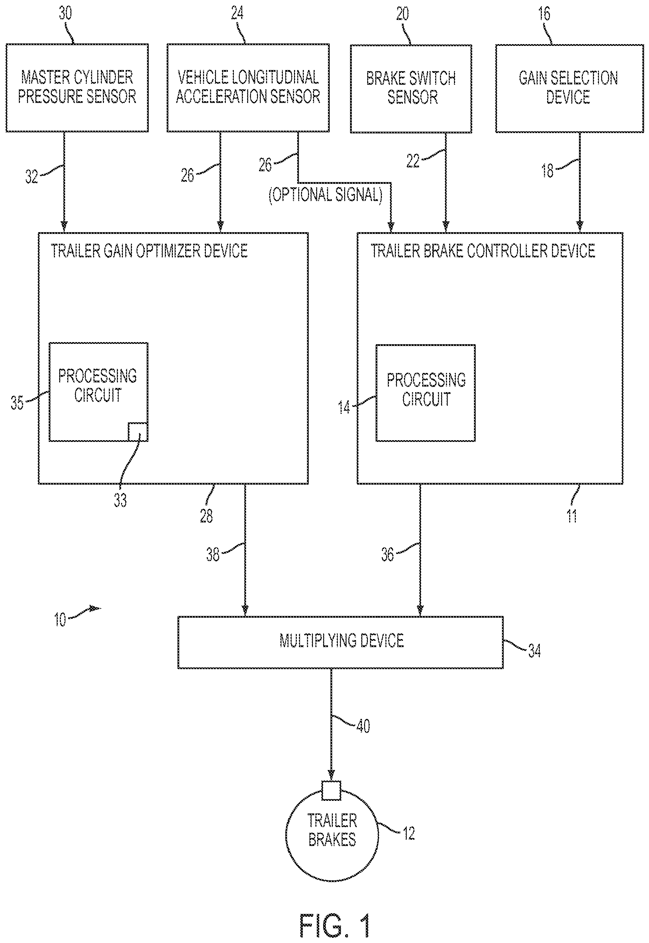

With reference to FIG. 1, there is shown a block diagram of an exemplary trailer brake system, generally indicated at 10, that is capable of implementing the present method. Although the present method is described in the context of an original equipment manufacturer (OEM) trailer brake system having electric brakes, it should be appreciated that the present method can also be used with one of a number of different trailer braking systems including, but certainly not limited to, OEM systems, aftermarket systems, electric brake systems, and EOH brake systems.

The brake system 10 includes a trailer brake controller device 11 that is an electronic device or module and is typically located in tow vehicle. However, the controller device 11 could be located in the trailer. The controller device 11 is constructed and arranged to control the operation of trailer brakes 12 by executing various electronic instructions, including those related to the present method. According to one embodiment, trailer brake controller device 11 includes an electronic processing device 14, although analog processing devices could also be used, as well as inputs, outputs, and any other suitable componentry that is known in the art. Because the individual hardware components and the overall arrangement of a brake controller are generally known in the art, a detailed description of such has been omitted.

A gain selection device 16 enables an operator to control or adjust the gain setting. The trailer brakes usually apply a braking force that is related to the vehicle braking event; thus, the "gain setting" broadly refers to the relationship between the trailer braking output and one or more vehicle braking inputs. The gain setting can be expressed in terms of a percentage, a ratio, a decimal logarithm, etc. The operator typically tries to optimize the gain setting by adjusting it to as high a setting as is possible, but just below the point where the trailer braking output results in a trailer wheel lockup.

Vehicle sensors are provided and can include any sensor or device capable of providing trailer brake controller 11 with information regarding deceleration, braking conditions, or other braking-related matters concerning the vehicle. For instance, vehicle sensors can include a brake switch sensor 20 that indicates whether or not the brake pedal is engaged or if the brake lights are activated. The signal 22 from the sensor 20 is received by the brake controller device 11. A vehicle longitudinal acceleration sensor 24, such as an accelerometer, measures how quickly the vehicle is accelerating or decelerating. The signal 26 from the sensor 28 can be received by the brake controller device 11 if brake switch 20 is not used. The signal 26 is also received by a trailer gain optimizer device 28, as explained below. The operator selected gain signal 18 is received by the trailer brake controller 11. The trailer brake controller device 11 can be a conventional device that receives the brake switch signal 20 (e.g., brake light activation) along with the operator selected gain signal 18. With this type of controller device, an output trailer gain 36 is generally the same as the operator selected gain 18. Another type of conventional controller device 11 receives the deceleration signal 26 along with the operator selected gain signal 18. With this type of controller device, the output trailer gain 36 is different from the operator selected gain 18 due to processing in processing circuit 14. Even with such a controller device 11, the operator may set the selected gain to be too low or too high.

A master cylinder pressure sensor 30 verifies the pressure in a vehicle master cylinder or a particular wheel braking circuit. In accordance with an embodiment, the signal 32 from the sensor 30 is received by the trailer gain optimizer device 28. During a braking event, the trailer gain optimizer device 28 is constructed and arranged to monitor the master cylinder pressure 32 and the vehicle deceleration 26 and based on comparison with expected data as explained below, will increase or decrease the output trailer gain 36.

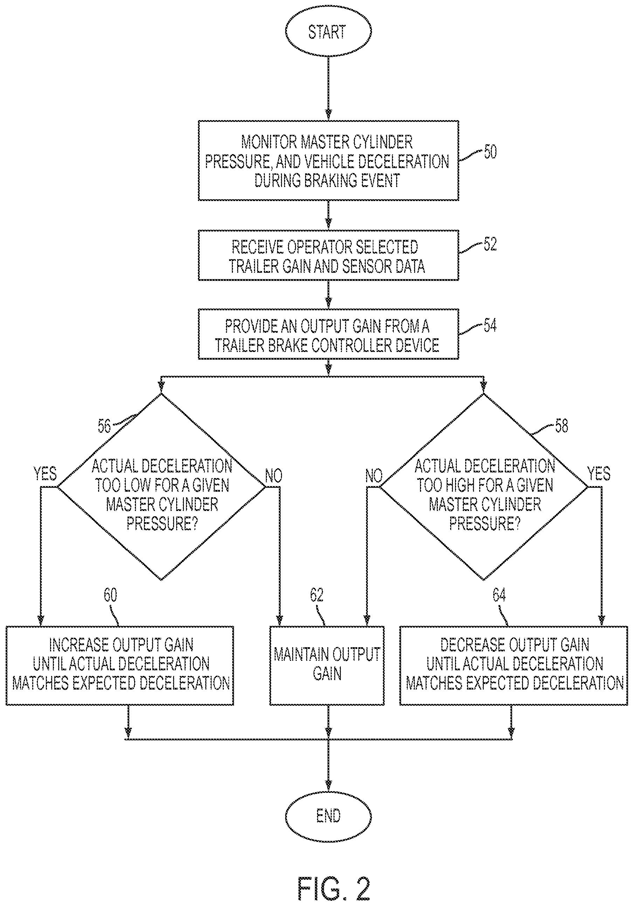

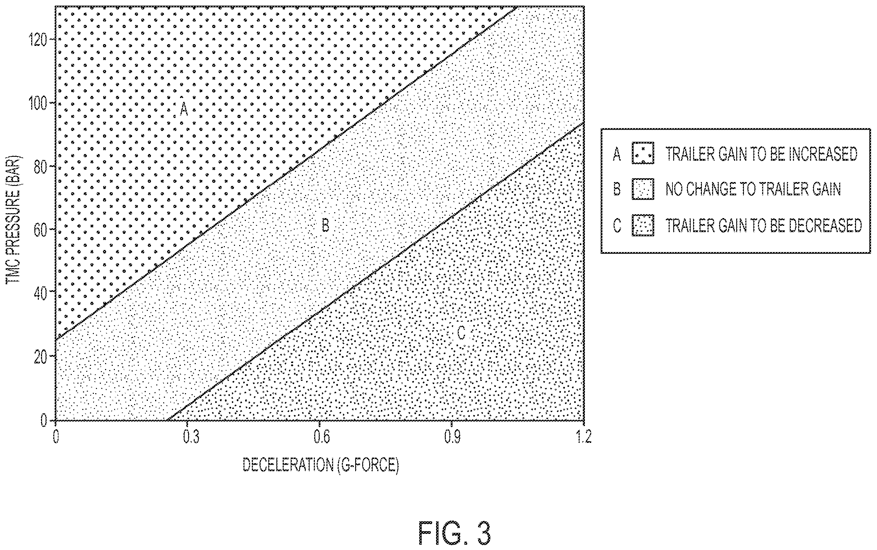

The method of the embodiment will be appreciated with regard to FIG. 2. In step 50, the master cylinder pressure signal 32 and vehicle longitudinal acceleration signal 26 are received by the trailer gain optimizer device 28 and in step 52, the operator selected gain signal 18 and data, for example, from sensor 20 or 26 is received by the trailer brake controller device 11. In step 54, the trailer brake controller 11 provides an output trailer gain 36. Steps 56 and 56 determine if the actual deceleration is not sufficient (e.g., is too low, too high) for a given master cylinder pressure. FIG. 3 is a pressure vs. deceleration diagram that shows regions when the output trailer gain would be decreased, increased or should remain constant, based on pressure and deceleration values. The data for such regions can be stored as a data table in a memory circuit 33 of a processing device 35 of the trailer gain optimizer device 28. Thus, in step 60, if the actual deceleration is too low for the master cylinder pressure, the output trailer gain 36 to the brakes 12 is increased automatically by device 28 until the vehicle's actual deceleration matches the expected deceleration at the given master cylinder pressure (from FIG. 3). For example, if the expected vehicle deceleration was 0.5 G, when the master cylinder pressure is 80 bar based on the data in FIG. 3, and the actual vehicle deceleration is 0.3 G, at a master cylinder pressure of 80 bar, the trailer gain optimizer device 28 would increase the output trailer gain until the vehicle deceleration matched the expected deceleration value. If the deceleration is not too low in step 56, the output trailer gain 36 is maintained in step 62. Step 58 determines if the deceleration is too high for the given master cylinder pressure. If so, in step 64, the output trailer gain 36 to the brakes 12 is decreased automatically until the vehicle's actual deceleration matches the expected deceleration at the given master cylinder pressure (from FIG. 3). These new optimized trailer gain values 40 will be retained, and reevaluated, for subsequent brake applications.

Returning to FIG. 1, a multiplying device 34 is provided to adjust the output trailer gain 36. In particular, based on steps 56 and 58, the output trailer gain 36 from the trailer brake controller device 11 is multiplied by an output or factor 38 from trailer gain optimizer device 28 and this optimized trailer gain 40 is sent to the brakes 12 of the trailer. Although multiplying device 34 is shown as a separate device, it can be appreciated that the multiplying device can be part of the trailer brake controller device 11 or the trailer gain optimizer device 28. Also, if desired, the trailer gain optimizer device 28 could be incorporated into the trailer brake controller device 11.

Alternately, trailer gain optimizer device 28 could be allowed to only increase the output trailer gain 36. In the case where trailer gain optimizer device 28 has increased the output trailer gain from what the operator had selected, and then conditions change, such that the trailer gain is now too high (due to a change in trailer loading, or other condition), the trailer gain optimizer device 28 may reduce the output trailer gain, but never to a setting less than the operator selected trailer gain 18. This eliminates the chances of the system 10 being responsible for under braking the trailer.

It should, of course, be understood that the pressure-deceleration plot in FIG. 3 is simply representative of an exemplary embodiment and that the exact shape of the plot or segments, the values of the data points or thresholds, etc. could differ from those shown here. Different plots or segments, other than those shown in FIG. 3, could also be used and employed by the present method.

Any of the disclosed circuits of the devices 11, 34 and/or 28 (including the processing circuit 35 or 14, the memory circuit 33, and their associated components) can be implemented in multiple forms. Example implementations of the disclosed circuits include hardware logic that is implemented in a logic array such as a programmable logic array (PLA), a field programmable gate array (FPGA), or by mask programming of integrated circuits such as an application-specific integrated circuit (ASIC). Any of these circuits also can be implemented using a software-based executable resource that is executed by a corresponding internal processor circuit such as a microprocessor circuit (not shown) and implemented using one or more integrated circuits, where execution of executable code stored in an internal memory circuit (e.g., within the memory circuit 33) causes the integrated circuit(s) implementing the processor circuit to store application state variables in processor memory, creating an executable application resource (e.g., an application instance) that performs the operations of the circuit as described herein. Hence, use of the term "circuit" in this specification refers to both a hardware-based circuit implemented using one or more integrated circuits and that includes logic for performing the described operations, or a software-based circuit that includes a processor circuit (implemented using one or more integrated circuits), the processor circuit including a reserved portion of processor memory for storage of application state data and application variables that are modified by execution of the executable code by a processor circuit. The memory circuit 33 can be implemented, for example, using a non-volatile memory such as a programmable read only memory (PROM) or an EPROM, and/or a volatile memory such as a DRAM, disk (solid state or rotating), etc.

Thus, the trailer gain optimizer device 28 automatically increases/decreases the trailer brake gain, in the cases where the operator has the gain set too low/high for the trailer conditions.

The foregoing preferred embodiments have been shown and described for the purposes of illustrating the structural and functional principles of the present invention, as well as illustrating the methods of employing the preferred embodiments and are subject to change without departing from such principles. Therefore, this invention includes all modifications encompassed within the scope of the following claims.

## Claims

1. A method for optimizing trailer braking gain for a trailer that is towed behind a vehicle, comprising the steps of:
a) receiving (52) an operator selected trailer gain,
b) during a braking event, receiving (50) braking data from at least one sensor (24, 30),
c) based on the received data and the selected trailer gain, providing (54) an output trailer gain,
d) during the braking event, monitoring pressure in a master cylinder (30) of a vehicle and an actual deceleration of the vehicle, and
e) determining (56, 58) if the actual deceleration is sufficient for the monitored master cylinder pressure and if not sufficient, automatically adjusting (60, 64) the output trailer gain to provide an optimized trailer gain to brakes of the trailer until the actual deceleration of the vehicle matches an expected deceleration at the monitored pressure value; wherein
e1) the determining step determines (56) whether the actual deceleration is too low for the monitored master cylinder pressure and if so, the automatically adjusting step includes increasing (60) the output trailer gain; and
e2) wherein the determining step determines (58) whether the actual deceleration is too high for the monitored master cylinder pressure and if so, the automatically adjusting step includes decreasing (64) the output trailer gain.

2. The method of claim 1, wherein the braking data includes data from a brake switch (20) of the vehicle.

3. The method of claim 1, wherein the braking data includes data from an acceleration sensor (24) of the vehicle.

4. The method of claim 1, wherein a trailer gain optimizer device is provided and the determining step occurs in the trailer gain optimizer device, in particular wherein the adjusting step includes multiplying (34, 62) an output from the trailer gain optimizer device to the output trailer gain, thereby defining the optimized trailer gain.

5. A trailer brake system for optimizing trailer braking gain for a trailer that is towed behind a vehicle, the system comprising:
a) a gain selection device (16) for inputting an operator selected trailer gain,
b) a trailer brake controller device (11) constructed and arranged to receive data regarding a braking event and to receive the selected trailer gain and to provide an output trailer gain,
c) a sensor (30) for monitoring pressure in a master cylinder of the vehicle,
d) an acceleration sensor (24) for determining an actual deceleration of the vehicle, and
e) a trailer gain optimizer device (28) constructed and arranged to receive data from the sensors and to determine if the actual deceleration is sufficient for the monitored master cylinder pressure and if not sufficient, to automatically adjust the output trailer gain to provide an optimized trailer gain to brakes of the trailer until the actual deceleration of the vehicle matches an expected deceleration at the monitored pressure value;
e1) wherein the trailer gain optimizer device includes a processing circuit (35) constructed and arranged to determine whether the actual deceleration is too low for the monitored master cylinder pressure and if so, to provide a signal to automatically increase the output trailer gain; and
e2) wherein the processing circuit (35) is further constructed and arranged to determine whether the actual deceleration is too high for the monitored master cylinder pressure and if so, to provide a signal to automatically decrease the output trailer gain.

6. The system of claim 5, wherein the trailer brake controller device is constructed and arranged to receive data from the acceleration sensor.

7. The system of claim 5, wherein the trailer brake controller device is constructed and arranged to receive data from a brake switch sensor (20).

8. The system of claim 5, further comprising a multiplying device (34) constructed and arranged to multiply an output from the trailer gain optimizer device to the output trailer gain, thereby defining the optimized trailer gain.

9. A trailer brake system for optimizing trailer braking gain for a trailer that is towed behind a vehicle, the system comprising:
a) means (25) for inputting an operator selected trailer gain,
b) means (50) for receiving data regarding a braking event and for receiving the selected trailer gain and to provide an output trailer gain,
c) means (30) for monitoring pressure in a master cylinder of the vehicle,
d) means (24) for obtaining an actual deceleration of the vehicle, and
e) means (35) for determining if the actual deceleration is sufficient for the monitored master cylinder pressure and if not sufficient, for automatically adjusting the output trailer gain to provide an optimized trailer gain to brakes of the trailer until the actual deceleration of the vehicle matches an expected deceleration at the monitored pressure value; wherein
e1) the means for determining is a trailer gain optimizer device (11) including a processing circuit (14) constructed and arranged to determine whether the actual deceleration is too low for the monitored master cylinder pressure and if so, to provide a signal to automatically increase the output trailer gain, and wherein
e2) the processing circuit (14) is further constructed and arranged to determine whether the actual deceleration is too high for the monitored master cylinder pressure and if so, to provide a signal to automatically decrease the output trailer gain.

10. The system of claim 9, wherein:
the means for receiving is a trailer brake controller device (11) constructed and arranged to receive data from the means for obtaining the actual deceleration (24) or from a brake switch sensor (20).

11. The system of claim 9
further comprising means (34) for multiplying an output of the means for determining to the output trailer gain, thereby defining the optimized trailer gain.

## Patentansprüche

1. Verfahren zum Optimieren der Anhängerbremsverstärkung für einen Anhänger, der hinter einem Fahrzeug gezogen wird, wobei das Verfahren folgende Schritte umfasst:
a) Empfangen (52) einer durch den Fahrzeuglenker ausgewählten Anhängerverstärkung,
b) während eines Bremsereignisses, Empfangen (50) von Bremsdaten von mindestens einem Sensor (24, 30),
c) auf der Grundlage der empfangenen Daten und der ausgewählten Anhängerverstärkung, Bereitstellen (54) einer Anhängerverstärkungsausgabe,
d) während des Bremsvorgangs, Überwachen des Drucks in einem Hauptzylinder (30) eines Fahrzeugs und einer Ist-Verlangsamung des Fahrzeugs und
e) Bestimmen (56, 58), ob die Ist-Verlangsamung für den überwachten Hauptzylinderdruck ausreicht, und falls sie nicht ausreicht, automatisches Einstellen (60, 64) der Anhängerverstärkungsausgabe, um an die Bremsen des Anhängers eine optimierte Anhängerverstärkung anzulegen, bis die Ist-Verlangsamung des Fahrzeugs mit einer Soll-Verlangsamung bei dem überwachten Druckwert übereinstimmt; wobei
e1) der Bestimmungsschritt bestimmt (56), ob die Ist-Verlangsamung für den überwachten Hauptzylinderdruck zu niedrig ist, und wenn dies der Fall ist, so umfasst der Schritt des automatischen Einstellens das Erhöhen (60) der Anhängerverstärkungsausgabe; und
e2) wobei der Bestimmungsschritt bestimmt (58), ob die Ist-Verlangsamung für den überwachten Hauptzylinderdruck zu hoch ist, und wenn dies der Fall ist, so umfasst der Schritt des automatischen Einstellens das Verringern (64) der Anhängerverstärkungsausgabe.

2. Verfahren nach Anspruch 1, wobei die Bremsdaten Daten von einem Bremsschalter (20) des Fahrzeugs enthalten.

3. Verfahren nach Anspruch 1, wobei die Bremsdaten Daten von einem Beschleunigungssensor (24) des Fahrzeugs enthalten.

4. Verfahren nach Anspruch 1, wobei eine Anhängerverstärkungs-Optimierungsvorrichtung vorhanden ist und wobei der Bestimmungsschritt in der Anhängerverstärkungs-Optimierungsvorrichtung ausgeführt wird, wobei insbesondere der Schritt des Einstellens das Multiplizieren (34, 62) eines Ausgangssignals von der Anhängerverstärkungs-Optimierungsvorrichtung mit der Anhängerverstärkungsausgabe umfasst, wodurch die optimierte Anhängerverstärkung definiert wird.

5. Anhängerbremssystem zum Optimieren der Anhängerbremsverstärkung für einen Anhänger, der hinter einem Fahrzeug gezogen wird, wobei das System umfasst:
a) eine Verstärkungsauswahlvorrichtung (16) zum Eingeben einer durch den Fahrzeuglenker ausgewählten Anhängerverstärkung,
b) eine Anhänger-Bremssteuervorrichtung (11), die dafür ausgelegt und geeignet ist, Daten bezüglich eines Bremsereignisses zu empfangen und die ausgewählte Anhängerverstärkung zu empfangen und eine Anhängerverstärkungsausgabe bereitzustellen;
c) einen Sensor (30) zum Überwachen des Drucks in einem Hauptzylinder des Fahrzeugs,
d) einen Beschleunigungssensor (24) zum Bestimmen einer Ist-Verlangsamung des Fahrzeugs und
e) eine Anhängerverstärkungs-Optimierungsvorrichtung (28), die dafür ausgelegt und geeignet ist, Daten von den Sensoren zu empfangen und zu bestimmen, ob die Ist-Verlangsamung für den überwachten Hauptzylinderdruck ausreicht, und falls sie nicht ausreicht, die Anhängerverstärkungsausgabe automatisch einzustellen, um an die Bremsen des Anhängers eine Anhängerverstärkung anzulegen, bis die Ist-Verlangsamung des Fahrzeugs mit einer Soll-Verlangsamung bei dem überwachten Druckwert übereinstimmt;
e1) wobei die Anhängerverstärkungs-Optimierungsvorrichtung eine Verarbeitungsschaltung (35) umfasst, die dafür ausgelegt und geeignet ist zu bestimmen, ob die Ist-Verlangsamung für den überwachten Hauptzylinderdruck zu gering ist, und wenn dies der Fall ist, ein Signal bereitzustellen, um die Anhängerverstärkungsausgabe automatisch zu erhöhen; und
e2) wobei die Verarbeitungsschaltung (35) des Weiteren dafür ausgelegt und geeignet ist zu bestimmen, ob die Ist-Verlangsamung für den überwachten Hauptzylinderdruck zu hoch ist, und wenn dies der Fall ist, ein Signal bereitzustellen, um die Anhängerverstärkungsausgabe automatisch zu verringern.

6. System nach Anspruch 5, wobei die Anhängerbremssteuervorrichtung dafür ausgelegt und geeignet ist, Daten von dem Beschleunigungssensor zu empfangen.

7. System nach Anspruch 5, wobei die Anhängerbremssteuervorrichtung dafür ausgelegt und geeignet ist, Daten von einem Bremsschaltersensor (20) zu empfangen.

8. System nach Anspruch 5, das des Weiteren eine Multiplikationsvorrichtung (34) umfasst, die dafür ausgelegt und geeignet ist, ein Ausgangssignal von der Anhängerverstärkungs-Optimierungsvorrichtung mit der Anhängerverstärkungsausgabe zu multiplizieren, wodurch die optimierte Anhängerverstärkung definiert wird.

9. Anhängerbremssystem zum Optimieren der Anhängerbremsverstärkung für einen Anhänger, der hinter einem Fahrzeug gezogen wird, wobei das System umfasst:
a) ein Mittel (25) zum Eingeben einer durch den Fahrzeuglenker ausgewählten Anhängerverstärkung,
b) ein Mittel (50) zum Empfangen von Daten bezüglich eines Bremsereignisses und zum Empfangen der ausgewählten Anhängerverstärkung und zum Bereitstellen einer Anhängerverstärkungsausgabe;
c) ein Mittel (30) zum Überwachen des Drucks in einem Hauptzylinder des Fahrzeugs,
d) ein Mittel (24) zum Erreichen einer Ist-Verlangsamung des Fahrzeugs und
e) ein Mittel (35) zum Bestimmen, ob die Ist-Verlangsamung für den überwachten Hauptzylinderdruck ausreicht, und falls sie nicht ausreicht, zum automatischen Einstellen der Anhängerverstärkungsausgabe, um an die Bremsen des Anhängers eine optimierte Anhängerverstärkung anzulegen, bis die Ist-Verlangsamung des Fahrzeugs mit einer Soll-Verlangsamung bei dem überwachten Druckwert übereinstimmt; wobei
e1) das Mittel zum Bestimmen eine Anhängerverstärkungs-Optimierungsvorrichtung (11) ist, die eine Verarbeitungsschaltung (14) umfasst, die dafür ausgelegt und geeignet ist zu bestimmen, ob die Ist-Verlangsamung für den überwachten Hauptzylinderdruck zu gering ist, und wenn dies der Fall ist, ein Signal bereitzustellen, um die Anhängerverstärkungsausgabe automatisch zu erhöhen, und wobei
e2) die Verarbeitungsschaltung (14) des Weiteren dafür ausgelegt und geeignet ist zu bestimmen, ob die Ist-Verlangsamung für den überwachten Hauptzylinderdruck zu hoch ist, und wenn dies der Fall ist, ein Signal bereitzustellen, um die Anhängerverstärkungsausgabe automatisch zu verringern.

10. System nach Anspruch 9, wobei:
das Mittel zum Empfangen eine Anhänger-Bremssteuervorrichtung (11) ist, die dafür ausgelegt und geeignet ist, Daten von dem Mittel zum Erreichen der Ist-Verlangsamung (24) oder von einem Bremsschaltersensor (20) zu empfangen.

11. System nach Anspruch 9,
das des Weiteren ein Mittel (34) umfasst, um ein Ausgangssignal des Mittels zum Bestimmen mit der Anhängerverstärkungsausgabe zu multiplizieren, wodurch die optimierte Anhängerverstärkung definiert wird.

## Revendications

1. Procédé permettant d'optimiser le gain de freinage de remorque d'une remorque qui est tractée derrière un véhicule, comprenant les étapes consistant à :
a) recevoir (52) un gain de remorque sélectionné par l'opérateur,
b) pendant un événement de freinage, recevoir (50) des données de freinage en provenance d'au moins un capteur (24, 30),
c) sur la base des données reçues et du gain de remorque sélectionné, produire (54) un gain de remorque de sortie,
d) pendant l'événement de freinage, contrôler la pression dans un maître-cylindre (30) de véhicule et une décélération réelle du véhicule, et
e) déterminer (56, 58) si la décélération réelle est suffisante pour la pression contrôlée dans le maître-cylindre et si elle n'est pas suffisante, ajuster automatiquement (60, 64) le gain de remorque de sortie pour fournir un gain de remorque optimisé aux freins de la remorque jusqu'à ce que la décélération réelle du véhicule concorde avec une décélération attendue à la valeur de pression contrôlée ; dans lequel :
e1) l'étape de détermination détermine (56) si la décélération réelle est trop faible pour la pression contrôlée dans le maître-cylindre et dans l'affirmative, l'étape d'ajustement automatique inclut l'augmentation (60) du gain de remorque de sortie ; et
e2) dans lequel l'étape de détermination détermine (58) si la décélération réelle est trop forte pour la pression contrôlée dans le maître-cylindre et dans l'affirmative, l'étape d'ajustement automatique inclut la diminution (64) du gain de remorque de sortie.

2. Procédé selon la revendication 1, dans lequel les données de freinage incluent des données provenant d'un contacteur de frein (20) du véhicule.

3. Procédé selon la revendication 1, dans lequel les données de freinage incluent des données provenant d'un capteur d'accélération (24) du véhicule.

4. Procédé selon la revendication 1, dans lequel est utilisé un dispositif d'optimisation de gain de remorque et l'étape de détermination a lieu dans le dispositif d'optimisation de gain de remorque, en particulier dans lequel l'étape d'ajustement inclut la multiplication (34, 62) d'une sortie issue du dispositif d'optimisation de gain de remorque par le gain de remorque de sortie, ce qui permet de définir le gain de remorque optimisé.

5. Système de frein de remorque permettant d'optimiser le gain de freinage de remorque d'une remorque qui est tractée derrière un véhicule, le système comprenant :
a) un dispositif de sélection de gain (16) permettant d'introduire un gain de remorque sélectionné par l'opérateur,
b) un dispositif de commande de frein de remorque (11) conçu et agencé pour recevoir des données concernant un événement de freinage et pour recevoir le gain de remorque sélectionné et produire un gain de remorque de sortie,
c) un capteur (30) destiné à contrôler la pression dans un maître-cylindre du véhicule,
d) un capteur d'accélération (24) destiné à déterminer une décélération réelle du véhicule, et
e) un dispositif d'optimisation de gain de remorque (28) conçu et agencé pour recevoir des données en provenance des capteurs et pour déterminer si la décélération réelle est suffisante pour la pression contrôlée dans le maître-cylindre et si elle n'est pas suffisante, pour ajuster automatiquement le gain de remorque de sortie afin de fournir un gain de remorque optimisé aux freins de la remorque jusqu'à ce que la décélération réelle du véhicule concorde avec une décélération attendue à la valeur de pression contrôlée ;
e1) dans lequel le dispositif d'optimisation de gain de remorque comporte un circuit de traitement (35) conçu et agencé pour déterminer si la décélération réelle est trop faible pour la pression contrôlée dans le maître-cylindre et dans l'affirmative, pour produire un signal afin d'augmenter automatiquement le gain de remorque de sortie ; et
e2) dans lequel le circuit de traitement (35) est conçu et agencé en outre pour déterminer si la décélération réelle est trop forte pour la pression contrôlée dans le maître-cylindre et dans l'affirmative, pour produire un signal afin de diminuer automatiquement le gain de remorque de sortie.

6. Système selon la revendication 5, dans lequel le dispositif de commande de frein de remorque est conçu et agencé pour recevoir des données en provenance du capteur d'accélération.

7. Système selon la revendication 5, dans lequel le dispositif de commande de frein de remorque est conçu et agencé pour recevoir des données en provenance d'un capteur contacteur de frein (20).

8. Système selon la revendication 5, comprenant en outre un dispositif de multiplication (34) conçu et agencé pour multiplier une sortie issue du dispositif d'optimisation de gain de remorque par le gain de remorque de sortie, ce qui permet de définir le gain de remorque optimisé.

9. Système de frein de remorque permettant d'optimiser le gain de freinage de remorque d'une remorque qui est tractée derrière un véhicule, le système comprenant :
a) un moyen (25) destiné à introduire un gain de remorque sélectionné par l'opérateur,
b) un moyen (50) destiné à recevoir des données concernant un événement de freinage et à recevoir le gain de remorque sélectionné ainsi qu'à produire un gain de remorque de sortie,
c) un moyen (30) destiné à contrôler la pression dans un maître-cylindre du véhicule,
d) un moyen (24) destiné à obtenir une décélération réelle du véhicule, et
e) un moyen (35) destiné à déterminer si la décélération réelle est suffisante pour la pression contrôlée dans le maître-cylindre et si elle n'est pas suffisante, à ajuster automatiquement le gain de remorque de sortie pour fournir un gain de remorque optimisé aux freins de la remorque jusqu'à ce que la décélération réelle du véhicule concorde avec une décélération attendue à la valeur de pression contrôlée ; dans lequel :
e1) le moyen de détermination est un dispositif d'optimisation de gain de remorque (11) comportant un circuit de traitement (14) conçu et agencé pour déterminer si la décélération réelle est trop faible pour la pression contrôlée dans le maître-cylindre et dans l'affirmative, pour produire un signal afin d'augmenter automatiquement le gain de remorque de sortie ; et dans lequel :
e2) le circuit de traitement (14) est conçu et agencé en outre pour déterminer si la décélération réelle est trop forte pour la pression contrôlée dans le maître-cylindre et dans l'affirmative, pour produire un signal afin de diminuer automatiquement le gain de remorque de sortie.

10. Système selon la revendication 9, dans lequel :
le moyen de réception est un dispositif de commande de frein de remorque (11) conçu et agencé pour recevoir des données en provenance du moyen destiné à obtenir la décélération réelle (24) ou en provenance d'un capteur contacteur de frein (20).

11. Système selon la revendication 9,
comprenant en outre un moyen (34) destiné à multiplier une sortie du moyen de détermination par le gain de remorque de sortie, ce qui permet de définir le gain de remorque optimisé.
